# EUROPEAN PATENT SPECIFICATION

(11) **EP 1 426 000 B1**
(45) Date of publication and mention of the grant of the patent: **01.03.2006**
(21) Application number: 03380275.2
(22) Date of filing: 28.11.2003
(51) Int. Cl.: A47J 31/44

(54) **Milk emulsifier for use on industrial coffee machines**
Milchaufschäumgerät für industrielle Kaffeemaschinen
Emulsifieur de lait pour machines à café industrielles

(30) Priority: 05.12.2002 ES 200202804
(43) Date of publication of application: 09.06.2004
(73) Proprietor: Sitexpress, S.L., 17005 Gerona (ES)
(72) Inventor: Lanao Gomez, Antoni, 17005 Gerona (ES); Trias Martin, Marc, 17005 Gerona (ES)
(74) Representative: Plaza Fernandez-Villa, Luis

(56) References cited:
- DE-A- 3 942 713
- FR-A- 2 701 373
- US-A- 4 735 133

## Description

### OBJECT OF THE INVENTION

This descriptive account relates to an application for Patent for Invention, corresponding to a milk emulsifier for use on industrial coffee machines, the purpose of which lies in allowing its use on the steam outlet of an industrial coffee machine, specifically those machines which dispense "espresso" coffee, with the application of the emulsifier obtaining milk in perfect conditions to be used emulsified in coffee-based preparations which require this type of product, such as coffees known as "cappuccinos".

### FIELD OF THE INVENTION

This invention is for application in the industry devoted to the manufacture of equipment, elements and accessories for industrial coffee machines.

### BACKGROUND TO THE INVENTION

The applicant is aware of certain pieces of equipment or devices known as "cappuccino units", which are the closest antecedents to the object of the invention. These "cappuccino units" are of two types, namely:
- With regulation of air and flow.
- With a flow regulator alone.

The task performed by these cappuccino units is that of absorbing the milk from a container through a silicone tube and an air regulator.

However, these devices or pieces of equipment must be used on the coffee machine, while at the same time requiring the milk to be emulsified, with the corresponding waste of time and difficulties observed in a hotel establishment.

The obvious solution to this problem would be to have a milk emulsifier which does not require any parameter to be adjusted, with the object of avoiding the regulation and absorption through the silicone tube, and allowing it to be applied directly inside the jug containing the emulsified milk

The document DE-3942713-A shows an example of such an emulsifier. However, the applicant is not currently aware of any milk emulsifier which has the characteristics described in this account.

### DESCRIPTION OF THE INVENTION

The milk emulsifier for use on industrial coffee machines which the invention proposes allows it to be attached directly to the coffee machines used in the professional hotel trade and has been designed ergonomically, with the aim of obtaining greater efficiency in its operation, durability, safety and cleaning.

As the emulsifier is configured with high precision parts, it requires no adjustment to function correctly, and can be used without having to be removed between applications.

More specifically, the milk emulsifier for use on industrial coffee machines which is the object of the invention is constructed from four parts configured as a rubber stopper, a cylindrical stainless steel tube, a nozzle and an outlet nozzle.

The rubber stopper is configured as the joining and protective seal between the steam outlet tube from the coffee machine and the emulsifier strictly speaking, avoiding the entry of impurities into the emulsifier, with this seal also allowing air to enter from the outside.

The cylindrical tube is configured to perform the function of tube holder, location and distribution of the different parts inside it.

As far as the nozzle is concerned, this is also configured as a part manufactured in stainless steel which screws onto and is placed on the steam tube nozzle, performing the function of joining and fastening of the two parts, being formed of an internal screw thread and an external screw thread, together with a flat seal.

The outlet nozzle is the last part which forms the structure, and where the most important parts for the correct functioning of the emulsifier are to be found, presenting an interior screw fitting to join it to the part constituting the nozzle, and having different orifices.

One of the orifices is designed to allow air to enter, having a slot facing the outside, passing through the parts configured as a cylindrical tube and the nozzle.

The second orifice is designed to be configured as a lateral orifice which performs the function of absorbing the liquid, with the nozzle finished off with a central hole for steam and liquid to exit.

The invention has a ring seal which performs the function of adjustment and assembly with the cylindrical tube.

### DESCRIPTION OF THE DIAGRAMS

To complement the description which is being made and with the object of helping to better understand the features of the invention, this descriptive account is accompanied, as an integral part of the same, by a set of plans which are illustrative and non-restrictive in character, and represent the following:
Figure number 1. - Corresponds to a breakdown view of the different parts which configure the milk emulsifier for use on industrial coffee machines which is the object of the invention.
Figure number 2. - Represents a cross sectional view of the object shown in figure number 1, with the constituent parts duly assembled.

### PREFERRED EMBODIMENT OF THE INVENTION

As can be observed from these figures, the milk emulsifier for use on industrial coffee machines is constituted from a rubber stopper (1) which forms the joining and protective seal between the steam outlet tube (10) coming from the coffee machine and the body forming the emulsifier, with the steam tube (10) passing through the inside of a cylindrical tube (2), which performs the function of nozzle, inside which the stainless steel parts are assembled and distributed.

The outlet tube (10) is attached adjacent to a nozzle (3) manufactured in stainless steel which can be screwed onto the nozzle of the steam tube (10), joining both parts.

The nozzle (3) has a flat seal (8).

Finally, the invention is completed with an outlet nozzle (4) which has an orifice or perforation (5), designed to allow air to enter, having a slot facing the outside, passing through the parts (2) and (3).

The part (4) which is screw fitted onto the part (3) which constitutes the nozzle has another orifice (6) located on the side, which performs the function of absorbing liquid, and finally incorporates a central perforation or hole (7) for steam and liquid to exit.

As far as the operation of the emulsifier is concerned, it should be indicated that firstly the nozzle of the steam tube (10) is unscrewed, and the emulsifier then inserted into the tube and screwed in to hold it in place.

Once connected, it will allow the pressure of the steam coming from the coffee machine boiler to reach the container holding the milk to be emulsified, and in this process the steam will be mixed with air entering through the rubber stopper (1), producing a "venturi" effect which will cause turbulence inside the container holding the milk, with this movement emulsifying the milk particles, leaving it perfectly emulsified.

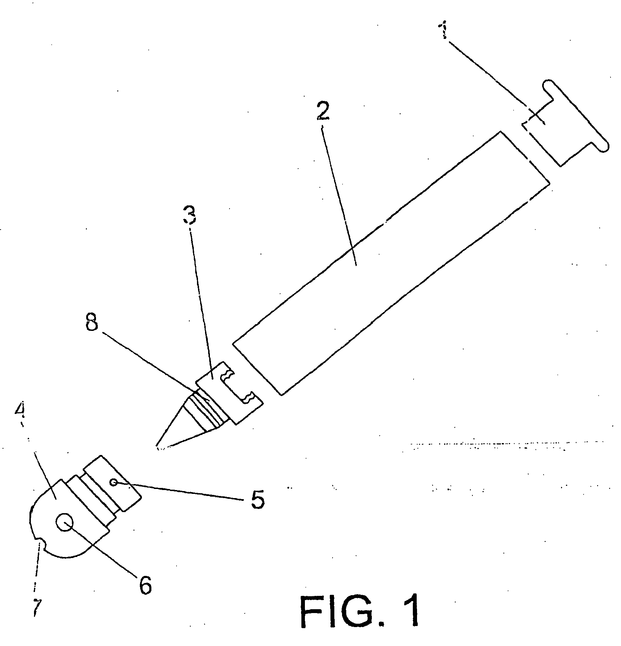

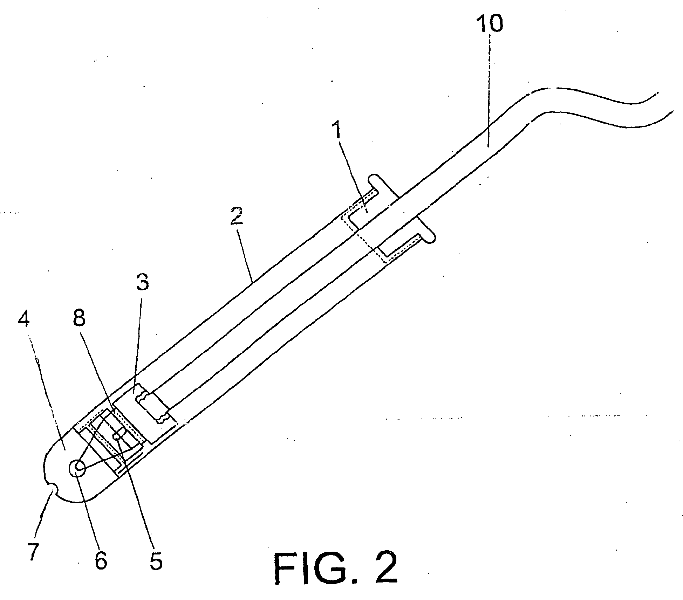

## Claims

1. Milk emulsifying apparatus applicable to industrial coffee machines, of the type comprising a cylindrical tubing (2) through which a steam pipe (10) passes from the coffee machine, the cylindrical tubing (2) ending in an external nozzle (4) which is coupled to an internal nozzle (3) through screwing, a side fluid inlet port (6), and a central bore (7) to allow steam and fluid out, **characterized in that** the external nozzle (4) is provided with an air inlet port (5) which passes through the cylindrical tubing (2) and the internal nozzle or jet (3), and the top of the cylindrical tubing (2) is provided with a rubber cap (1), which constitutes the steam pipe (10) coupling joint and protection, and which allows air in from the exterior, to produce inside the device, together with the steam, a "Venturi" effect, which causes the turbulence required to emulsify milk particles.

2. Milk emulsifying apparatus applicable to industrial coffee machines according to claim one, **characterized in that** both the cylindrical tubing (2) and the internal nozzle (3) and the external nozzle (4) are made of stainless steel.

3. Milk emulsifying apparatus applicable to industrial coffee machines according to the previous claims, **characterized in that** the cylindrical tubing (2) and the internal nozzle (3) comprise, at their nexus, a flat O-ring joint (8).

## Revendications

1. Appareil pour émulsifier le lait applicable aux machines à café industrielles, du type comprenant un tuyau cylindrique (2) à travers lequel passe un tuyau de vapeur (10) de la machine à café, le tuyau cylindrique (2) finissant en un gicleur externe (4) couplé à un gicleur interne (3) par vissage. Un port latéral d'admission de fluide (6) et un orifice central (7) permettent à la vapeur et au fluide de sortir et se caractérisent dans le fait que le bec externe (4) est pourvu d'un port d'admission d'air (5) qui passe à travers le tuyau cylindrique (2) et le bec interne ou jet (3) et que le bout du tuyau cylindrique (2) est pourvu d'un bouchon en caoutchouc (1) qui constitue le joint de couplage et la protection du tuyau de vapeur (10) et qui admet l'air de l'extérieur pour produire à l'intérieur, et avec la vapeur, un effet "Venturi" qui cause la turbulence nécessaire pour émulsifier les particules de lait.

2. Appareil pour émulsifier le lait applicable aux machines à café industrielles selon revendication première **caractérisé par le fait que** le tuyau cylindrique (2), le bec interne (3) et le bec externe (4) sont en inox.

3. Appareil pour émulsifier le lait applicable aux machines à café industrielles, selon revendications précédentes, **caractérisé par le fait que** la jonction entre le tuyau cylindrique (2) et le bec interne (3) comprend un joint torique (8).

## Patentansprüche

1. Ein Milchemulgator für Industriekaffeemaschinen, des Typs Zylinderrohr (2), durch das eine von der Kaffeemaschine kommende Dampfröhre läuft, das Zylinderrohr (2) endet in einer äußeren Düse (4), die mit einer inneren Düse (3) durch Anschraubung eines seitlichen Einlasskanals für Flüssigkeit (6) und einer zentralen Bohröffnung (7) verbunden ist, um Dampfablass und Flüssigkeitsausstoß zu ermöglichen, dieses System ist **dadurch gekennzeichnet, dass** die äußere Düse(4) mit einer Öffnung für Lufteinlass (5) ausgestattet ist, die Luft strömt durch das Zylinderrohr (2) und die innere Düse (3), das obere Ende des Zylinderrohrs (2) ist mit einem Gummiverschluss (1) versehen, der zusammen mit der Verbindung und der Schutzvorrichtung die Dampfröhre (10) bildet, und der Luft von Außen herein lässt, damit in dem Gerät zusammen mit dem Dampf ein "Venturieffekt" entstehen kann, der die notwendigen Turbulenzen zum Emulgieren der Milchpartikel erzeugt.

2. Milchemulgator für Industriekaffeemaschinen gemäß Patentanspruch eins und **dadurch gekennzeichnet, dass** beides, Zylinderrohr (2) sowie Innen- (3) und Außendüse (4) aus Edelstahl hergestellt sind.

3. Milchemulgator für Industriekaffeemaschinen gemäß dem vorherigen Patentanspruch und **dadurch gekennzeichnet, dass** das Zylinderrohr und die Innendüse (3) an ihrer Verbindungsstelle mit einer O-Ringdichtung (8) versehen sind.
